# EUROPEAN PATENT SPECIFICATION

(11) **EP 4 579 843 B1**
(45) Date of publication and mention of the grant of the patent: **11.03.2026**
(21) Application number: 24204963.3
(22) Date of filing: 07.10.2024
(51) Int. Cl.: H01M 10/054, H01M 10/0567, H01M 10/0569, H01M 10/42, H01M 10/0568

(54) **ALUMINUM BATTERY**
ALUMINIUMBATTERIE
BATTERIE À L'ALUMINIUM

(30) Priority: 29.12.2023 TW 112151601
(43) Date of publication of application: 02.07.2025
(73) Proprietor: APh ePower Co., Ltd., Kaohsiung City 821 (TW)
(72) Inventor: WU, Jui-Hsuan, Kaohsiung City 821 (TW); TSAI, Shih Po Ta, Kaohsiung City 821 (TW); YANG, Chun-Chieh, Kaohsiung City 821 (TW); CHEN, Wei-An, Kaohsiung City 821 (TW)
(74) Representative: Becker, Eberhard

(56) References cited:
- WO-A1-2016/026321
- CN-A- 116 525 948
- CN-B- 106 558 693
- US-A1- 2015 249 261
- US-A1- 2023 207 882

## Description

### BACKGROUND

### Technical Field

The disclosure relates to an aluminum battery.

### Description of Related Art

During the manufacturing process of the aluminum battery, external water vapor often enters the electrolyte, causing the aluminum battery to easily produce undesirable gases during the charging and discharging process, thereby reducing its performance (such as low Coulomb efficiency). In addition, the electricity storage reaction of the aluminum battery is aluminum deposition and dissolution. When the aluminum deposition and dissolution rates cannot be balanced, or when aluminum dendrites are formed due to charge accumulation on the surface of the pole piece, the service life of the aluminum battery will be reduced.

US2023/207882 A1, CN 106 558 693 B, WO 2016/026321 A1 and US 2015/249261 A1 describe aluminum batteries comprising a positive electrode, a negative electrode, a separator disposed between both electrodes, and an electrolyte comprising an aluminum halide (preferably aluminum chloride) and an ionic liquid (preferably 1-ethyl-3-methylimidazolium chloride).

### SUMMARY

The disclosure provides an aluminum battery that can effectively extend its service life while maintaining good performance.

An aluminum battery of the disclosure includes a positive electrode, a negative electrode, a separator, and an electrolyte. The separator is disposed between the positive electrode and the negative electrode. The electrolyte is impregnated into the separator, the positive electrode, and the negative electrode. The electrolyte includes aluminum halide, ionic liquid, and an additive, and the additive includes an isocyanate compound.

In an embodiment of the disclosure, the isocyanate compound further includes an acrylic functional group.

In an embodiment of the disclosure, a weight ratio relationship between the aluminum halide, the ionic liquid, and the additive in the electrolyte, in descending order, is the aluminum halide, the ionic liquid, and the additive.

In an embodiment of the disclosure, a weight ratio of the additive in the electrolyte is greater than or equal to 0.2wt%.

In an embodiment of the disclosure, a weight ratio of the aluminum halide in the electrolyte is between 49wt% and 65wt%.

In an embodiment of the disclosure, a weight ratio of the ionic liquid in the electrolyte is between 35wt% and 51wt%.

In an embodiment of the disclosure, a total weight ratio of the aluminum halide, the ionic liquid, and the additive in the electrolyte is 100wt%.

In an embodiment of the disclosure, the aluminum halide includes aluminum chloride, and the ionic liquid includes 1-ethyl-3-methylimidazolium chloride.

In an embodiment of the disclosure, the isocyanate compound is configured to form an amine compound when the aluminum battery is operating.

In an embodiment of the disclosure, the amine compound is adsorbed on a surface of the negative electrode when the aluminum battery is operating.

Based on the above, the disclosure introduces the electrolyte including the isocyanate compound into the design of the aluminum battery. By reacting the isocyanate functional group with the water vapor in the electrolyte, the moisture content in the electrolyte can be reduced to inhibit the generation of undesirable gases, and the aluminum dissolving reaction of the negative electrode can be enhanced to inhibit the formation of aluminum dendrites. In this way, good performance can be maintained while effectively extending the service life.

In order to make the above-mentioned features and advantages of the disclosure clearer and easier to understand, the following embodiments are given and described in details with accompanying drawings as follows.

### BRIEF DESCRIPTION OF THE DRAWINGS

FIG. 1 is a schematic diagram of moisture content test results of embodiments and a comparative example.
FIG. 2 is a schematic diagram of active substance test results of embodiments.
FIG. 3 is a schematic diagram of average Coulomb efficiency test results of embodiments and a comparative example.
FIG. 4 is a schematic diagram of service life test results of embodiments and a comparative example.
FIG. 5 is a partial schematic diagram of an electrochemical device for performing cyclic charging and discharging experiments according to the disclosure.
FIG. 6 and FIG. 7 are schematic diagrams of corrosion test results of embodiments and a comparative example.

### DESCRIPTION OF THE EMBODIMENTS

In order for the content of the disclosure to be easier to understand, the following embodiments are given as examples in which the disclosure can actually be implemented. For the sake of clarity, many practical details are described in the following description. However, it should be understood that the practical details should not be used to limit the disclosure. In other words, in some embodiments of the disclosure, the practical details are unnecessary.

In order to clearly illustrate the disclosure, the description of known aluminum battery design rules is omitted here. Persons of ordinary skill in the art may design according to actual requirements without departing from the spirit and scope of the disclosure.

The disclosure is more fully described with reference to the drawings of the embodiment. However, the disclosure may also be embodied in various forms and should not be limited to the embodiments described herein. The thicknesses, sizes, or magnitudes of layers or regions in the drawings may be exaggerated for clarity's sake. The same or similar reference numerals denote the same or similar elements, and the repeated descriptions will not be repeated in the following paragraphs.

Unless otherwise defined, all terms (including technical and scientific terms) used herein have the same meaning as commonly understood by persons of ordinary skill in the art to which this disclosure belongs.

Unless otherwise stated, the term "between" used in the specification to define a value range is intended to cover a range equal to and between the stated endpoint values. For example, a size range between a first value and a second value means that the size range may cover the first value, the second value, and any value between the first value and the second value.

First of all, it should be noted that the disclosure is applicable to the case where the electrolyte of the aluminum battery contains a trace amount of water vapor. Since the aforementioned trace amount of water vapor come from the external environment during the manufacturing process, the weight of the water vapor can be ignored when describing the total weight of the electrolyte below.

In the embodiment, an aluminum battery includes a positive electrode, a negative electrode, a separator, and an electrolyte. The separator is disposed between the positive electrode and the negative electrode, and the electrolyte is impregnated into the separator, the positive electrode, and the negative electrode. Here, the positive electrode, the negative electrode, the separator, and the electrolyte can be configured with each other in a suitable manner known in the aluminum battery field, and the disclosure is not limited thereto.

In addition, the electrolyte includes aluminum halide, ionic liquid, and an additive, and the additive includes an isocyanate compound. Accordingly, the embodiment introduces the electrolyte including the isocyanate compound into the design of the aluminum battery. By reacting the isocyanate functional group with the water vapor in the electrolyte, the moisture content in the electrolyte can be reduced to inhibit the generation of undesirable gases, and the aluminum dissolving reaction of the negative electrode can be enhanced to inhibit the formation of aluminum dendrites. In this way, good performance can be maintained while effectively extending the service life. It should be noted that since the disclosure is designed for the aluminum battery, the electrolyte used is the aluminum halide and the ionic liquid that can generate active substances such as aluminum ions, which is not an electrolyte component that is used in other battery types.

Furthermore, the isocyanate functional group is configured to form an amine compound when the aluminum battery is operating. In other words, the isocyanate functional group can react with the water vapor in the electrolyte to form the amine compound, which can effectively reduce the moisture content and inhibit the generation of gases such as hydrogen chloride (HCl) that can have adverse effects on aluminum battery. Moreover, the aforementioned amine compound can be adsorbed on a surface of the negative electrode when the aluminum battery is operating (such as discharging) due to the lone pair of electrons (Lewis base) on the nitrogen, and react with Al³⁺ (Lewis acid) on the surface of the negative electrode to form a metal complex, thereby improving the ability to dissolve aluminum. Therefore, during the cycle charging and discharging process of the aluminum battery, the aluminum dendrites can be effectively suppressed to extend the battery service life.

In some embodiments, the reaction between the isocyanate functional group and the electrolyte will result in the formation of carbon dioxide, and this gas will not have an adverse effect on the aluminum battery and is therefore not an undesirable gas, but the disclosure is not limited thereto.

In some embodiments, the isocyanate compound also includes an acrylic functional group, and the isocyanate compound does not include a benzene ring functional group. For example, the isocyanate compound includes isocyanate ethyl acrylate (C₆H₇NO₃), so the generated amine compound can be isocyanate group (C₅H₄NO₂, the chemical formula is H⁻N=C=O, and the chemical structural formula is: 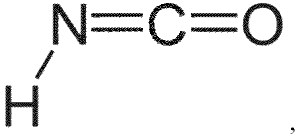 but the disclosure is not limited thereto. The isocyanate compound can be an analog of other isocyanate ethyl acrylate, as long as it has the isocyanate functional group and can react with the water vapor in the electrolyte to form the amine compound, it falls within the protection scope of the disclosure. The amine compound varies depending on the type of the isocyanate compound.

In some embodiments, a weight ratio relationship between the aluminum halide, the ionic liquid, and the additive in the electrolyte, in descending order, is the aluminum halide, the ionic liquid, and the additive, but the disclosure is not limited thereto.

In some embodiments, a weight ratio of the additive in the electrolyte is greater than or equal to 0.2wt%, and preferably the weight ratio of the additive in the electrolyte is less than or equal to 5wt% to ensure that the aluminum battery will not fail due to the action of the additive. However, the disclosure is not limited thereto.

In some embodiments, a weight ratio of the aluminum halide in the electrolyte is between 49wt% and 65wt%, but the disclosure is not limited thereto.

In some embodiments, a weight ratio of the ionic liquid in the electrolyte is between 35wt% and 51wt%, but the disclosure is not limited thereto.

In some embodiments, a total weight ratio of the aluminum halide, the ionic liquid, and the additive in the electrolyte is 100wt%. In other words, the electrolyte is composed only of the aluminum halide, the ionic liquid, and the additive including the isocyanate compound. Here, the weight of the trace amount of water vapor in the electrolyte can be ignored.

In some embodiments, the aluminum halide includes aluminum chloride (AlCl₃), and the ionic liquid includes 1-ethyl-3-methylimidazolium chloride. The aforementioned ionic liquid is a hydrophilic ionic liquid, so when the aforementioned ionic liquid or the like is used, a more significant improvement effect can be achieved, but the disclosure is not limited thereto.

In some embodiments, since the synergistic effect of the additive including the isocyanate compound and the aluminum foil can achieve a better result, a material of the negative electrode preferably includes the aluminum foil, but the disclosure is not limited thereto.

In some embodiments, a thickness of the negative electrode is between 10 microns and 100 microns, but the disclosure is not limited thereto.

In some embodiments, a material of the positive electrode includes a graphite carbon-based material, a conductive additive, and an adhesive. The conductive additive includes conductive carbon black (super P), and the adhesive includes carboxymethylcellulose, styrenebutadiene rubber, or a combination thereof, but the disclosure is not limited thereto.

In some embodiments, a thickness of the positive electrode is between 100 microns and 300 microns, but the disclosure is not limited thereto.

Hereinafter, with reference to Embodiments 1 to 5 and Comparative Example 1, the efficacy of the aluminum battery of the disclosure will be described in more detail. In addition, although the following Embodiments 1 to 5 are described, without departing from the scope of the disclosure, the details of the materials used, the procedures and the like may be suitably changed, and the disclosure should not be limitedly construed by Embodiments 1 to 5 described below.

### <Embodiment 1>

An aluminum foil (thickness 0.05 millimeter (mm)) was used as a negative electrode, and graphite slurry was coated on a nickel foil (thickness 0.05 mm) to prepare a positive electrode. Next, fiberglass was provided as a separator. Then, arrangement was made in the order of the negative electrode, the separator, and the positive electrode, and an electrolyte composed of aluminum chloride (aluminum halide), 1-ethyl-3-methylimidazolium chloride (ionic liquid), and isocyanate ethyl acrylate (additive) was injected and encapsulated to obtain an aluminum battery of Embodiment 1. A weight ratio of aluminum chloride in the electrolyte was 58.97wt%, a weight ratio of 1-ethyl-3-methylimidazolium chloride (EMIC) in the electrolyte was 36.03wt%, and a weight ratio of isocyanate ethyl acrylate in the electrolyte was 5wt%.

### <Embodiment 2>

An aluminum battery of Embodiment 2 is similar to the aluminum battery of Embodiment 1. The differences are that the weight ratio of aluminum chloride in the electrolyte was 61.45wt%, the weight ratio of 1-ethyl-3-methylimidazolium chloride (EMIC) in the electrolyte was 37.54wt%, and the weight ratio of isocyanate ethyl acrylate in the electrolyte was 1wt%.

### <Embodiment 3>

An aluminum battery of Embodiment 3 is similar to the aluminum battery of Embodiment 1. The differences are that the weight ratio of aluminum chloride in the electrolyte was 61.6wt%, the weight ratio of 1-ethyl-3-methylimidazolium chloride in the electrolyte was 37.6wt%, and the weight ratio of isocyanate ethyl acrylate in the electrolyte was 0.8wt%.

### <Embodiment 4>

An aluminum battery of Embodiment 4 is similar to the aluminum battery of Embodiment 1. The differences are that the weight ratio of aluminum chloride in the electrolyte was 61.8wt%, the weight ratio of 1-ethyl-3-methylimidazolium chloride in the electrolyte was 37.6wt%, and the weight ratio of isocyanate ethyl acrylate in the electrolyte was 0.6wt%.

### <Embodiment 5>

An aluminum battery of Embodiment 5 is similar to the aluminum battery of Embodiment 1. The differences are that the weight ratio of aluminum chloride in the electrolyte was 61.9wt%, the weight ratio of 1-ethyl-3-methylimidazolium chloride in the electrolyte was 37.8wt%, and the weight ratio of isocyanate ethyl acrylate in the electrolyte was 0.4wt%.

### <Embodiment 6>

An aluminum battery of Embodiment 6 is similar to the aluminum battery of Embodiment 1. The differences are that the weight ratio of aluminum chloride in the electrolyte was 62wt%, the weight ratio of 1-ethyl-3-methylimidazolium chloride in the electrolyte was 37.8wt%, and the weight ratio of isocyanate ethyl acrylate in the electrolyte was 0.2wt%.

### <Comparative example 1>

An aluminum battery of Comparative Example 1 is similar to the aluminum battery of Embodiment 1. The differences are that the electrolyte was composed of aluminum chloride (aluminum halide) and 1-ethyl-3-methylimidazolium chloride (ionic liquid) and did not include the additive including the isocyanate compound, the weight ratio of aluminum chloride in the electrolyte was 62wt%, and the weight ratio of 1-ethyl-3-methylimidazolium chloride in the electrolyte was 38wt%.

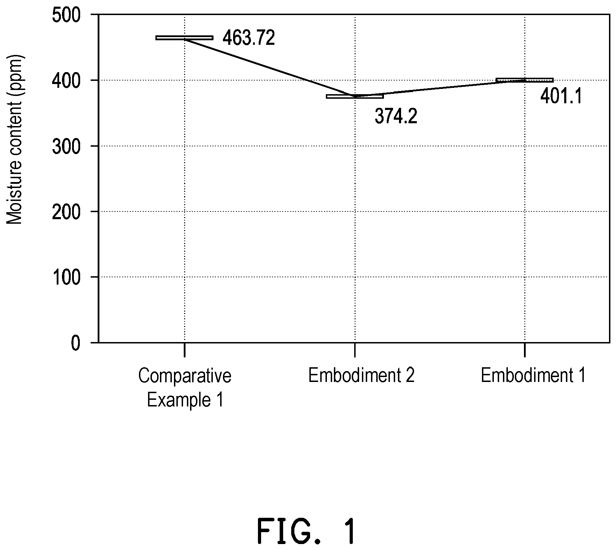

Embodiments 1 to 6 and Comparative Example 1 were tested, the results are shown in FIG. 1 to 7 and the conclusions are as follows.

FIG. 1 is a schematic diagram of moisture content test results of Embodiments 1 and 2 and Comparative Example 1. The moisture content of the electrolyte was measured with a Coulomb moisture meter. From the results in FIG. 1, it can be seen that the average moisture content of Embodiments 1 and 2 decreased by 62.6 to 89.5 ppm compared with Comparative Example 1, which means that the isocyanate functional group does react with the water vapor in the electrolyte and generates amine compound (C₅H₄NO₂) and CO₂ to reduce the moisture content.

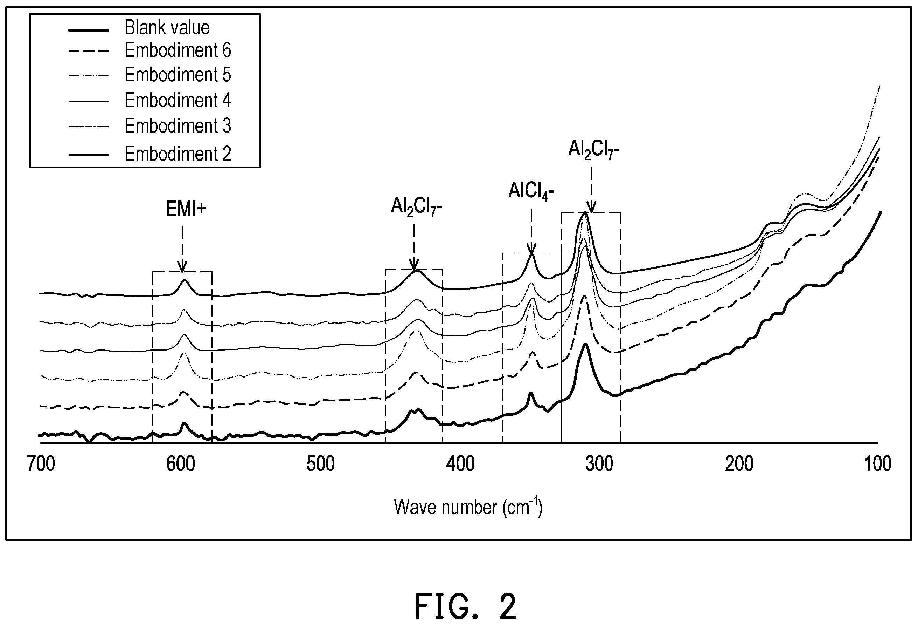

FIG. 2 is a schematic diagram of active substance test results of Embodiments 2 to 6. A Raman spectrometer was used to analyze whether the signals of the active substances such as AlCl₄-, Al₂Cl₇-, and EMI⁺ disappear. From the results in FIG. 2, it can be seen that the concentration of the active substances in the electrolyte is not affected within the range of the addition ratio of Embodiments 2 to 6. That is, the aluminum battery can operate normally within the range of the addition ratio of Embodiments 2 to 6.

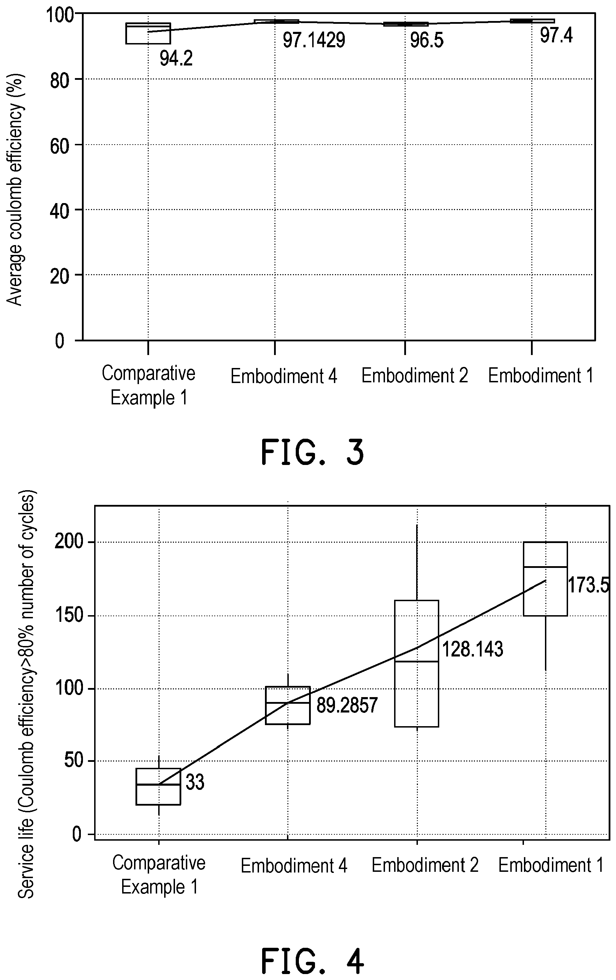

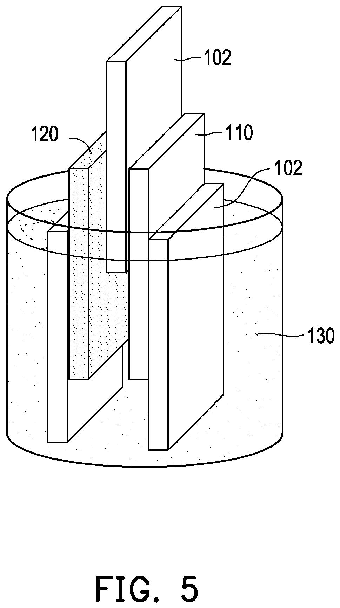

FIG. 3 is a schematic diagram of Coulomb efficiency test results of Embodiments 1, 2, and 4 and Comparative Example 1. FIG. 4 is a schematic diagram of service life test results of Embodiments 1, 2, and 4 and Comparative Example 1. FIG. 5 is a partial schematic diagram of an electrochemical device for performing cyclic charging and discharging experiments. The aluminum battery was a soft-packed aluminum battery, and the spacing between a negative electrode 110, a positive electrode 120, and an electrolyte 130 of the aluminum battery was fixed through a fixing member 102 (such as a glass slide) of FIG. 5 such that the positions of the negative electrode 110 and the positive electrode 120 were fixed, and the test was performed at a charging and discharging rate of 4C. From the results in FIG. 3 and FIG. 4, it can be seen that compared with Comparative Example 1, the Coulomb efficiencies of the batteries in Embodiments 1, 2, and 4 increase as the additive ratio increases, and the service life also has the same trend, which means that adding the electrolyte including the isocyanate compound can significantly improve the aluminum dissolving effect of the aluminum negative electrode, while inhibiting the formation of dendrites and extending the service life of the battery.

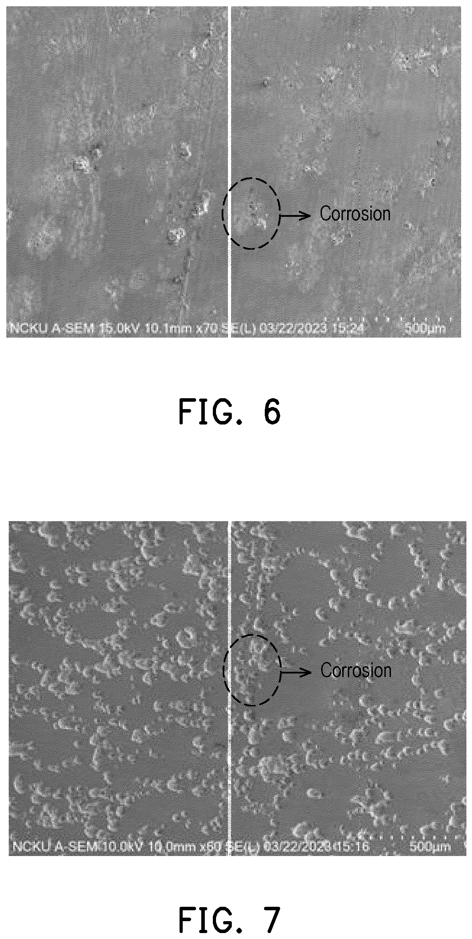

FIG. 6 and FIG. 7 are schematic diagrams of corrosion test results of Comparative Example 1 and Embodiment 2 respectively. A scanning electron microscope was used to conduct the corrosion test. From the results in FIG. 6 and FIG. 7, it can be seen that the isocyanate functional group reacts with the water in the electrolyte to form the amine compound, which can be adsorbed on the surface of the aluminum negative electrode and react with Al³⁺ (Lewis acid) to form the metal complex, thereby improving the aluminum dissolving reaction of the aluminum negative electrode, and making the corrosion distribution relatively uniform.

In summary, the disclosure introduces the electrolyte including the isocyanate compound into the design of the aluminum battery. By reacting the isocyanate functional group with the water vapor in the electrolyte, the moisture content in the electrolyte can be reduced to inhibit the generation of undesirable gases, and the aluminum dissolving reaction of the negative electrode can be enhanced to inhibit the formation of aluminum dendrites. In this way, good performance can be maintained while effectively extending the service life.

### Reference Sign List

- 102:: fixing member
- 110:: negative electrode
- 120:: positive electrode
- 130:: electrolyte

## Claims

1. An aluminum battery, comprising:
a positive electrode (120);
a negative electrode (110);
a separator, disposed between the positive electrode (120) and the negative electrode (110); and
an electrolyte (130), impregnated into the separator, the positive electrode (120), and the negative electrode (110), wherein the electrolyte (130) comprises aluminum halide, ionic liquid, and an additive, and the additive comprises an isocyanate compound.

2. The aluminum battery according to claim 1, wherein the isocyanate compound further comprises an acrylic functional group.

3. The aluminum battery according to claim 1, wherein a weight ratio relationship between the aluminum halide, the ionic liquid, and the additive in the electrolyte (130) is, in descending order, the aluminum halide, the ionic liquid, and the additive.

4. The aluminum battery according to claim 1, wherein a weight ratio of the additive in the electrolyte (130) is greater than or equal to 0.2wt%.

5. The aluminum battery according to claim 1, wherein a weight ratio of the aluminum halide in the electrolyte (130) is between 49wt% and 65wt%.

6. The aluminum battery according to claim 1, wherein a weight ratio of the ionic liquid in the electrolyte (130) is between 35wt% and 51wt%.

7. The aluminum battery according to claim 1, wherein a total weight ratio of the aluminum halide, the ionic liquid, and the additive in the electrolyte (130) is 100 wt%.

8. The aluminum battery according to claim 1, wherein the aluminum halide comprises aluminum chloride, and the ionic liquid comprises 1-ethyl-3-methylimidazolium chloride.

9. The aluminum battery according to claim 1, wherein the isocyanate compound is configured to form an amine compound when the aluminum battery is operating.

10. The aluminum battery according to claim 9, wherein the amine compound is adsorbed on a surface of the negative electrode (110) when the aluminum battery is operating.

## Patentansprüche

1. Aluminiumbatterie, umfassend:
eine positive Elektrode (120);
eine negative Elektrode (110);
einen Separator, der zwischen der positiven Elektrode (120) und der negativen Elektrode (110) angeordnet ist; und
einen Elektrolyten (130), der in den Separator, die positive Elektrode (120) und die negative Elektrode (110) imprägniert ist, wobei der Elektrolyt (130) Aluminiumhalogenid, ionische Flüssigkeit und ein Additiv umfasst und das Additiv eine Isocyanat-Verbindung umfasst.

2. Aluminiumbatterie nach Anspruch 1, wobei die Isocyanat-Verbindung ferner eine Acryl-Funktionsgruppe umfasst.

3. Aluminiumbatterie nach Anspruch 1, wobei ein Gewichtsverhältnis zwischen dem Aluminiumhalogenid, der ionischen Flüssigkeit und dem Additiv in dem Elektrolyten (130) in absteigender Reihenfolge das Aluminiumhalogenid, die ionische Flüssigkeit und das Additiv ist.

4. Aluminiumbatterie nach Anspruch 1, wobei ein Gewichtsverhältnis des Additivs in dem Elektrolyten (130) größer oder gleich 0,2 Gew.-% ist.

5. Aluminiumbatterie nach Anspruch 1, wobei ein Gewichtsverhältnis des Aluminiumhalogenids in dem Elektrolyten (130) zwischen 49 Gew.-% und 65 Gew.-% liegt.

6. Aluminiumbatterie nach Anspruch 1, wobei ein Gewichtsverhältnis der ionischen Flüssigkeit in dem Elektrolyten (130) zwischen 35 Gew.-% und 51 Gew.-% liegt.

7. Aluminiumbatterie nach Anspruch 1, wobei ein Gesamtgewichtsverhältnis des Aluminiumhalogenids, der ionischen Flüssigkeit und des Additivs in dem Elektrolyten (130) 100 Gew.-% beträgt.

8. Aluminiumbatterie nach Anspruch 1, wobei das Aluminiumhalogenid Aluminiumchlorid umfasst und die ionische Flüssigkeit 1-Ethyl-3-Methylimidazoliumchlorid umfasst.

9. Aluminiumbatterie nach Anspruch 1, wobei die Isocyanat-Verbindung so konfiguriert ist, dass sie bei Betrieb der Aluminiumbatterie eine Amin-Verbindung bildet.

10. Aluminiumbatterie nach Anspruch 9, wobei die Amin-Verbindung bei Betrieb der Aluminiumbatterie an einer Oberfläche der negativen Elektrode (110) adsorbiert wird.

## Revendications

1. Batterie à l'aluminium, comprenant:
une électrode positive (120);
une électrode négative (110);
un séparateur, disposé entre l'électrode positive (120) et l'électrode négative (110); et
un électrolyte (130), imprégné dans le séparateur, l'électrode positive (120) et l'électrode négative (110), dans lequel l'électrolyte (130) comprend un halogénure d'aluminium, un liquide ionique et un additif, et l'additif comprend un composé isocyanate.

2. Batterie à l'aluminium selon la revendication 1, dans laquelle le composé isocyanate comprend en outre un groupe fonctionnel acrylique.

3. Batterie à l'aluminium selon la revendication 1, dans laquelle le rapport pondéral entre l'halogénure d'aluminium, le liquide ionique et l'additif dans l'électrolyte (130) est, par ordre décroissant, l'halogénure d'aluminium, le liquide ionique et l'additif.

4. Batterie à aluminium selon la revendication 1, dans laquelle le rapport pondéral de l'additif dans l'électrolyte (130) est supérieur ou égal à 0,2 % en poids.

5. Batterie à aluminium selon la revendication 1, dans laquelle le rapport pondéral de l'halogénure d'aluminium dans l'électrolyte (130) est compris entre 49 % et 65 % en poids.

6. Batterie à aluminium selon la revendication 1, dans laquelle le rapport pondéral du liquide ionique dans l'électrolyte (130) est compris entre 35 % en poids et 51 % en poids.

7. Batterie à aluminium selon la revendication 1, dans laquelle le rapport pondéral total de l'halogénure d'aluminium, du liquide ionique et de l'additif dans l'électrolyte (130) est de 100 % en poids.

8. Batterie à aluminium selon la revendication 1, dans laquelle l'halogénure d'aluminium comprend du chlorure d'aluminium et le liquide ionique comprend du chlorure de 1-éthyl-3-méthylimidazolium.

9. Batterie à aluminium selon la revendication 1, dans laquelle le composé isocyanate est configuré pour former un composé aminé lorsque la batterie à aluminium est en fonctionnement.

10. Batterie à l'aluminium selon la revendication 9, dans laquelle le composé aminé est adsorbé sur une surface de l'électrode négative (110) lorsque la batterie à l'aluminium est en fonctionnement.
